# EUROPEAN PATENT SPECIFICATION

(11) **EP 2 654 343 B1**
(45) Date of publication and mention of the grant of the patent: **24.08.2016**
(21) Application number: 13177012.5
(22) Date of filing: 26.12.2008
(51) Int. Cl.: H04W 36/00, H04L 12/66, H04L 12/46

(54) **METHOD, APPARATUS AND SYSTEM FOR PERFORMING HANDOVER BETWEEN APS**
EIN ÜBERGABEVERFAHREN, VORRICHTUNG UND SYSTEM ZWISCHEN APS
PROCÉDÉ, APPAREIL ET SYSTÈME DE TRANSFERT ENTRE APS

(30) Priority: 29.12.2007 CN 200710306083; 12.12.2008 CN 200810185545
(43) Date of publication of application: 23.10.2013
(62) Divisional of application: 08871037.1
(73) Proprietor: Huawei Technologies Co., Ltd., Longgang District Shenzhen, Guangdong 518129 (CN)
(72) Inventor: Wu, Jian, 518129 Shenzhen (CN)
(74) Representative: Thun, Clemens

(56) References cited:
- KR-A- 20080 085 388
- "3rd Generation Partnership Project;Technical Specification Group Radio Access Network;Home (e)NodeB;Network aspects(Release 7)", 3GPP DRAFT; R3-072198 HOME NB TR_V030_WC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, 31 October 2007 (2007-10-31) , XP050423668,
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 8)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.2.0, 5 October 2007 (2007-10-05), pages 1-109, XP050377577,
- "3rd Generation Partnership Project; Technical Specification Group Services and System Aspects; General Packet Radio Service (GPRS) enhancements for Evolved Universal Terrestrial Radio Access Network (E-UTRAN) access (Release 8)", 3GPP STANDARD; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.0, 13 December 2007 (2007-12-13), pages 1-167, XP050363622,
- "3rd Generation Partnership Project; Technical Specification Group Radio Access Network; Evolved Universal Terrestrial Access Network (E-UTRAN); S1 Application Protocol (S1AP) (Release 8)", 3GPP STANDARD; 3GPP TS 36.413, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.0, 13 December 2007 (2007-12-13), pages 1-125, XP050377689,
- "3rd Generation Partnership Project; Technical Specification Group Radio Access Network; Evolved Universal Terrestrial Radio Access Network (EUTRAN); X2 application protocol (X2AP) (Release 8)", 3GPP STANDARD; 3GPP TS 36.423, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.0, 13 December 2007 (2007-12-13), pages 1-60, XP050377730,
- NOKIA ET AL: '3G HNB - Architecture Considerations' 3GPP DRAFT; R3-072197 3G HNB ARCHITECTURE CONSIDERATIONS vol. RAN WG3, 31 October 2007, JEJU ISLAND, XP050162979

## Description

### Field of the Invention

The present invention relates to a mobile communications technology, and in particular, to a method, apparatus, and system for performing handover between access points (APs).

### Background of the Invention

The universal mobile telecommunications system (UMTS) is a third generation (3G) mobile phone technology. The UMTS uses wireless code division multiple access (WCDMA) as the lower layer standard, and is prototyped by the Third Generation Partnership Project (3GPP). The UMTS represents a response from Europe to the requirements of the ITU IMT-2000 for 3G cellular radio systems.

The UMTS AP is an emerging UMTS base station, which is applicable to small area such as home and office location and is intended to solve the coverage and capacity problems. The UMTS AP may be connected to an operator's network through broadband access and provide various 3G services.

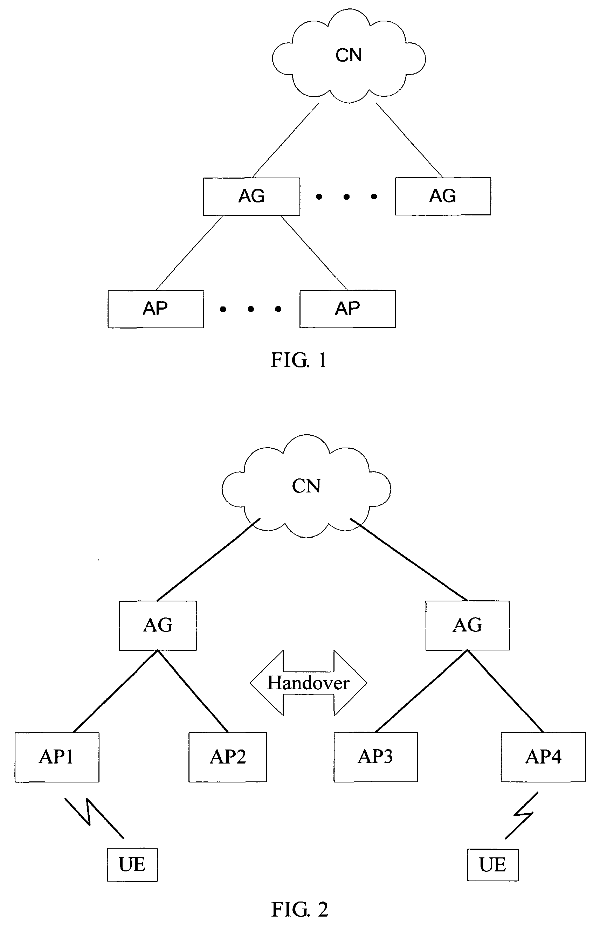

FIG. 1 shows a mainstream architecture of an AP network in the prior art. As shown in FIG. 1, multiple APs are connected to the operator's core network through an access gateway (AG). Multiple AG devices may be available on an operator's network.

The AP generally implements the functions of the NodeB and radio network controller (RNC) on a WCDMA network, and the function of the RNC implemented by the AP is specified by the 3GPP protocol. There are a huge number of APs on the AP network. If each AP is allocated with a radio network controller identity (RNC-ID), the number of RNC-IDs is insufficient. Thus, multiple APs may share the same RNC-ID on the AP network. The AG implements the agent functions of the RNC, including Iu interface flag conversion, radio access bearer (RAB) connection flag and IP address conversion, and user plane forwarding. The agent functions of the RNC that the AG implements are not specified by the 3GPP protocol. At the core network side, the AG is considered as an RNC. Generally, each AG is allocated with an RNC-ID, and all the APs under the same AG share the RNC-ID of the AG. Multiple APs may constitute a network to cover a large area. When a user equipment (UE) moves in the AP network, the UE may be handed over between APs. As shown in FIG. 2, the UE may be handed over between APs within the AG or across the AG.

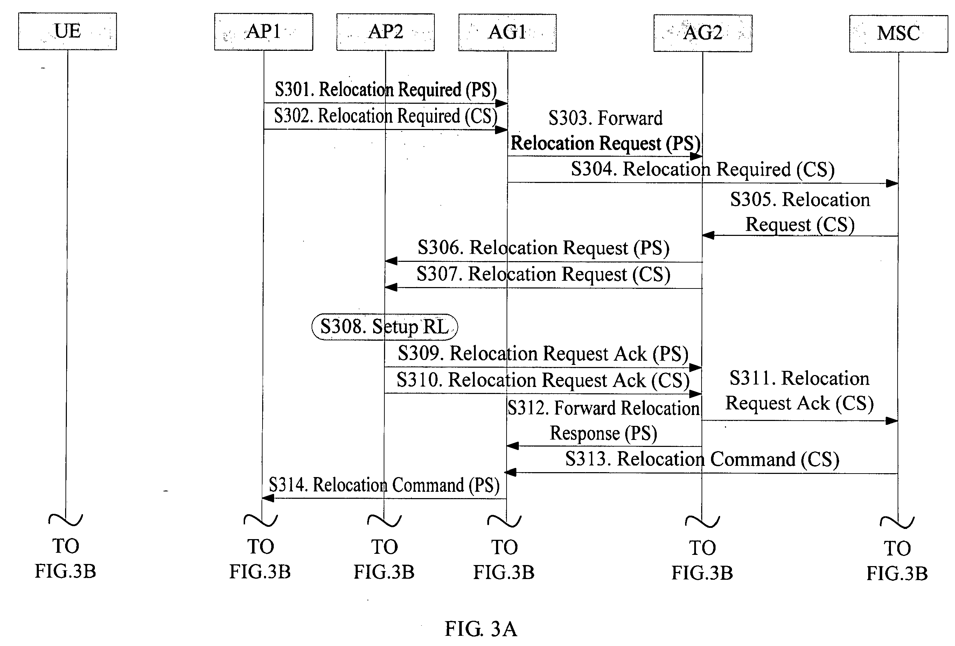

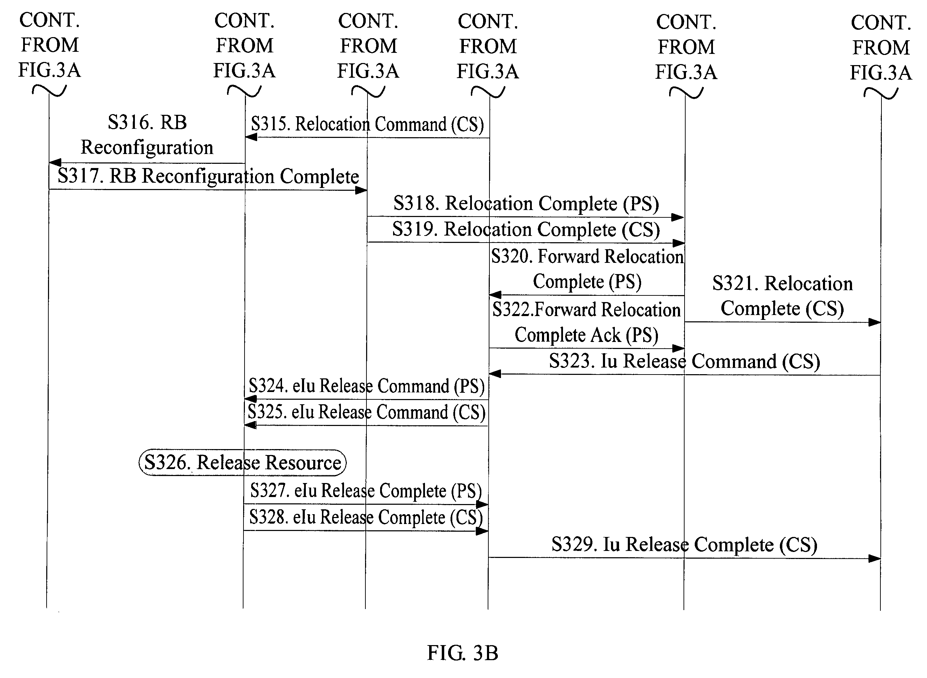

The inventor discovers the following problems in the prior art: Multiple handover solutions are defined on the WCDMA network in the prior art, such as soft handover, hard handover, and hard handover with migration; these handover solutions are applicable to the macro network architecture; the hard handover with migration is the main process applicable to the AP network, as shown in FIG 3. The hard handover with migration is one of the main methods applicable to the handover on the AP network in the prior art. However, this method is only applicable to a scenario where different AGs are available and the APs use different RNC-IDs. When the handover is implemented between APs that use the same RNC-ID, the handover process defined in the protocol cannot be used, thus causing handover failure.

3GPP TR R3.020 V0.3.0 discloses the purpose of this TR is to capture the discussion on 3G HNB as well as the LTE HNB and to provide the guidance for the actual solution for 3G HNB and LTE HNB.

3GPP TS 36.300 V 8.2.0 discloses an overview and overall description of the E-UTRAN radio interface protocol architecture. Details of the radio interface protocols will be specified is companion specifications of the 36 series.

3GPP TS 23.401 discloses V 8.0.0 discloses: the present document defines the Stage 2 service description for the Evolved 3GPP Packet Switched Domain- also known as the Evolved Packet System (EPS) in this document. The Evolved 3GPP Packet Switched Domain provides IP connectivity using the Evolved Universal Terrestrial Radio Access Network (E-UTRAN). The specification covers both roaming and non-roaming scenarios and covers all aspects, including mobility between E-UTRAN and pre- E-UTRAN 3GPP radio access technologies, policy control and charging, and authentication.

3GPP TS 36.413 V8.0.0 discloses: the present document specifies the E-UTRAN radio network layer signaling protocol for the S1 interface. The S1 Application Protocol (S1AP) supports the functions of S1 interface by signaling procedures defined in this document.

3GPP TS 36.423 V8.0.0 discloses: the present document specifies the radio network layer signaling procedures of the control plane between eNodeBs in EUTRAN. X2AP supports the functions of X2 interface by signaling procedures defined in this document.

3GPP R3-072197 discloses: the Iu/IP interface is used to connect HNB and the PLMN, core network, eliminating the stringent delay and delay jitter requirements imposed by the Iub interface.

### Summary of the Invention

Embodiments of the present invention provide a method, apparatus, and system for performing handover between APs, so that the handover may be implemented between a source AP and a target AP when the source AP and the target AP use the same RNC-ID and the handover is invisible to the core network.

To achieve the above objective, a method for performing handover for a user equipment, UE, between a source access point, AP, and a target AP is provided, wherein the source AP and the target AP are connected to a core network, CN, through an access gateway, AG, wherein the AG is allocated with an radio network controller identity, RNC-ID, and the target AP and source AP under the AG share the RNC-ID of the AG,
the method comprises:
receiving (S607), by the AG, a handover complete message sent from the target AP, notifying the AG of the information that the UE completes the handover from the source AP to the target AP and a reconfiguration in the target AP, wherein the handover complete message is sent by the target AP after the target AP receives a handover request from the source AP and receives a RB Reconfiguration Complete message from the UE;
adjusting, by the AG, uplink and downlink tunnels between the AG and the source AP to uplink and downlink tunnels between the AG and the target AP.

In addition, an access gateway, AG, for performing handover for a user equipment, UE, between a source access point, AP, and a target AP is provided, wherein the source AP and the target AP are connected to a core network, CN, through the AG, wherein the AG is allocated with a radio network controller identifier, RNC-ID, and the target AP and source AP under the AG share the RNC-ID, wherein the AG comprises:
an unit configured to receive a handover complete message sent from the target AP, notifying the AG of the information that the UE completes the handover from the source AP to the target AP and a reconfiguration in the target AP, wherein the handover complete message is sent by the target AP after the target AP receives a handover request from the source AP and receives a RB Reconfiguration Complete message from the UE;
an unit configured to adjust uplink and downlink tunnels between the AG and the source AP to uplink and downlink tunnels between the AG and the target AP.

A system for performing handover for a user equipment, UE, between a source access point, AP, and a target AP, and the system comprises the UE, the target AP and a access gateway, AG.

The technical solution of the present invention has the following merits: The handover, being invisible to the core network, between the source AP and the target AP is implemented, which overcomes the problem in the prior art that the handover between two APs using the same RNC-ID cannot be implemented; and in addition, the burden of the core network is lightened.

### Brief Description of the Drawings

To make the technical solution under the present invention clearer, the accompanying drawings for illustrating the embodiments of the present invention or the prior art are outlined below. Apparently, the accompanying drawings are for the exemplary purpose only, and those skilled in the art can derive other drawings from such accompanying drawings without any creative work.
FIG. 1 shows a mainstream architecture of an AP network in the prior art;
FIG 2 is a schematic diagram illustrating the handover of a UE between APs in the prior art;
FIG. 3A and FIG 3B show a process of hard handover with migration in the prior art;
FIG. 4 shows a process of handover between an AP1 and an AP2 that use the same RNC-ID in a first embodiment of the present invention;
FIG. 5 shows a process of handover between an AP1 and an AP2 that use the same RNC-ID in a second embodiment of the present invention;
FIG. 6 shows a process of handover between an AP1 and an AP2 that use the same RNC-ID in a third embodiment of the present invention;
FIG. 7 shows a structure of an AP in a fourth embodiment of the present invention; and
FIG. 8 shows a structure of an AG in a fifth embodiment of the present invention.

### Detailed Description of the Embodiments

For better understanding of the objective, technical solution and merits of the present invention, the present invention is hereinafter described in detail with reference to the accompanying drawings. The following describes the technical solution provided in embodiments of the present invention by taking the UMTS as an example. However, this does not limit the applications of the technical solution of the present invention in other systems.

In embodiments of the present invention, AP1 represents the source AP, and AP2 represent the target AP; the UE is handed over between AP1 and AP2. It is understandable that the present invention is not limited by a specific AP ID.

In the technical solution provided in embodiments of the present invention, the UE is handed over from AP1 to AP2 when AP1 and AP2 use the same RNC-ID; through the handover, the UE context on AP1 are moved to AP2, and the tunnel path is adjusted on the AG This process is invisible to the core network. Because the handover is implemented without the core network, the burden of the core network is lightened and the handover is compatible with current core network. In addition, this technical solution is applicable to all AP networks with a similar architecture, such as the UMTS or global system for mobile communications (GSM).

Before initiating the handover, AP1 may judge whether the handover is implemented between APs that use the same RNC-ID or between APs that use different RNC-IDs. AP1 is configured with an AP neighbor cell list and a macro network neighbor cell list, where the neighbor cell list includes an RNC-ID and a Cell ID. Thus, when AP1 initiates the handover, AP1 may check whether AP2 is the AP neighbor cell and has the same RNC-ID; if AP2 is the AP neighbor cell, AP1 determines to perform handover between APs; if AP2 and AP1 have the same RNC-ID, AP1 initiates handover between APs that use the same RNC-ID.

The following describes the technical solution of the present invention in detail with reference to exemplary embodiments.

### First Embodiment

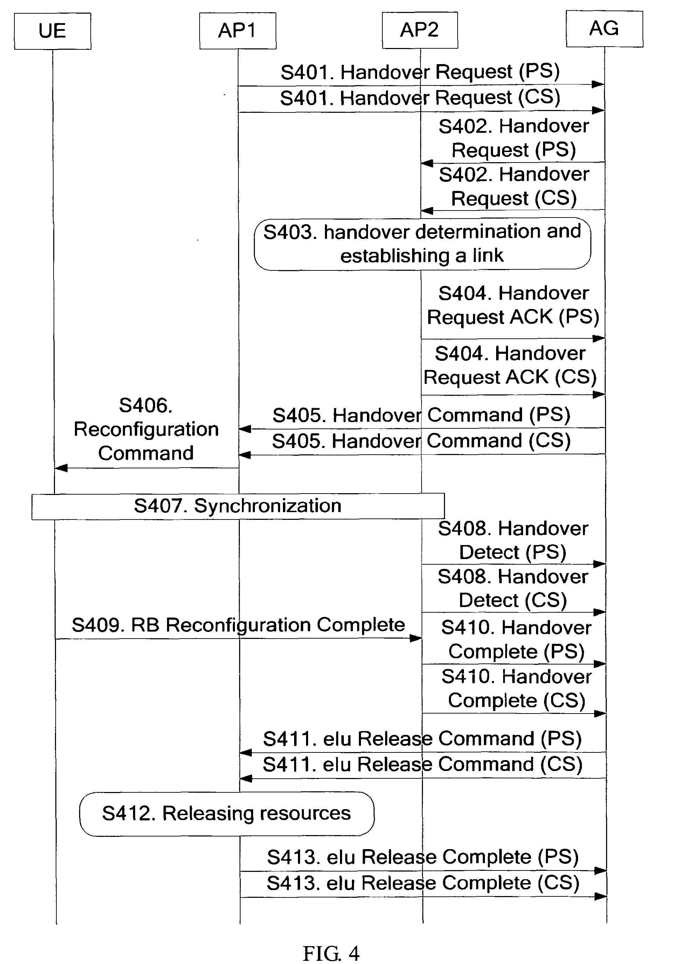

FIG. 4 shows a signaling process in which the UE is handed over between AP1 and AP2 that use the same RNC-ID in the first embodiment of the present invention. When the UE needs to be handed over from AP1 to AP2, the UE sends the UE parameters (including PS context or CS context) on AP1 to AP2 through the handover process in the first embodiment. Then, the AG adjusts related tunnel path. Because this entire handover process is invisible to the core network, this process overcomes the problem in the prior art where the mobile switching center (MSC) of the core network does not support the handover between APs that use the same RNC-ID. The process includes the following steps:
Step S401: AP1 sends a Handover Required message to the AG.

The Handover Required message carries the PS context or CS context of the UE. Through the message, AP1 sends the PS context or CS context of the UE to the AG.

In addition, after AP1 sends the Handover Required message, AP1 may start a timeout protection timer to wait for a handover command. If AP1 does not receive any handover command when the timer times out, AP1 initiates a handover cancellation process.

Step S402: The AG returns a Handover Required message to AP2.

The Handover Required message carries the PS context or CS context of the UE. Through the message, the AG sends the PS context or CS context of the UE to AP2.

In this step, if the AG cannot find the address of AP2, the AG returns a Handover Preparation Failure message to AP1. Then, the process ends.

Step S403: After receiving the PS context or CS context of the UE, AP2 makes a handover determination. If determining that related resources meet the handover conditions, AP2 reserves resources, establishes a transmission link and a radio link, and waits for the access of the UE.

Related resources include radio and transmission resources and resources of AP2, such as processing capabilities, memory, and specifications of AP2.

AP2 determines, according to the received PS context or CS context of the UE, radio and transmission resources and resources of AP2, that the handover conditions are met if the radio and transmission resources and resources of AP2 can meet the requirements of the PS context or CS context of the UE. Then, AP2 sets a radio link and a transmission tunnel according to the PS context or CS context of the UE.

In this step, if the radio transmission resources or the resources of AP2 are insufficient, for example, the air interface code resources are insufficient and AP user specifications are restricted, or if any capabilities are not supported, for example, specified integrity protection/encryption algorithm, AP2 returns a Handover Failure message that carries corresponding failure causes to the AG. The AG returns a Handover Preparation Failure message that carries corresponding failure causes to AP1. Then, the process ends.

Step S404: AP2 sends a Handover Request ACK to the AG.

If the lossless handover is supported, AP2 may send the back transmission tunnel (used to forward downlink data buffered on AP1 to AP2) parameters of the UE to the AG through the Handover Request ACK.

Step S405: The AG sends a Handover Command to AP 1.

If the lossless handover is supported, the AG may send the back transmission tunnel parameters of the UE to AP1 through the Handover Command.

Step S406: After receiving the Handover Command from the AG, AP1 sends an RB Reconfiguration message to the UE.

Step S407: After receiving the RB Reconfiguration message, the UE initiates a synchronization process and begins to synchronize with AP2.

Step S408: AP2 sends a Handover Detect command to the AG.

The AG may adjust the tunnel path after receiving the Handover Detect command. The adjustment process includes adjusting the uplink and downlink tunnels between the AG and AP1 to the uplink and downlink tunnels between the AG and AP2.

Step S409: The UE sends an RB Reconfiguration Complete message to AP2.

At this time, the UE completes the synchronization with AP2, and sends an RB Reconfiguration Complete message to AP2.

Step S410: After receiving the RB Reconfiguration Complete message, AP2 sends a Handover Complete message to the AG.

If the AG does not adjust the tunnel path in step S408, the AG may also adjust the tunnel path after receiving the Handover Complete message. The adjustment process includes adjusting the uplink and downlink tunnels between the AG and AP1 to the uplink and downlink tunnels between the AG and AP2.

Step S411: The AG sends an eIu Release Command to AP1.

Step S412: After receiving the eIu Release Command, AP1 executes the process of releasing the resources of AP1.

Step S413: After releasing the resources of AP1, AP1 notifies the AG of the completion of resource release through an eIu Release Complete message.

When AP1 initiates the handover preparation but does not send the RB Reconfiguration message to the UE or AP1 sends the RB Reconfiguration message to the UE but the UE returns it to AP1, AP1 may send a Handover Cancel message to the AG to cancel the handover. After receiving the Handover Cancel message, the AG returns a Handover Cancel Acknowledge message to AP1, and releases the connection with the eIu interface of AP2 and related resources.

If AP1 receives a Handover Failure message (mentioned in step S403) before receiving the Handover Cancel Acknowledge message, the handover cancellation process ends.

In addition, when AP1 finds that the handover fails in one of the CS domain and the PS domain but succeeds or is being performed in the other domain, AP1 may initiate a handover cancellation process in the other domain.

In this embodiment, the PS context or CS context of the UE do not pass through the MSC of the core network, and thus invisible to the core network. In this way, the handover between APs that use the same RNC-ID can be implemented.

### Second Embodiment

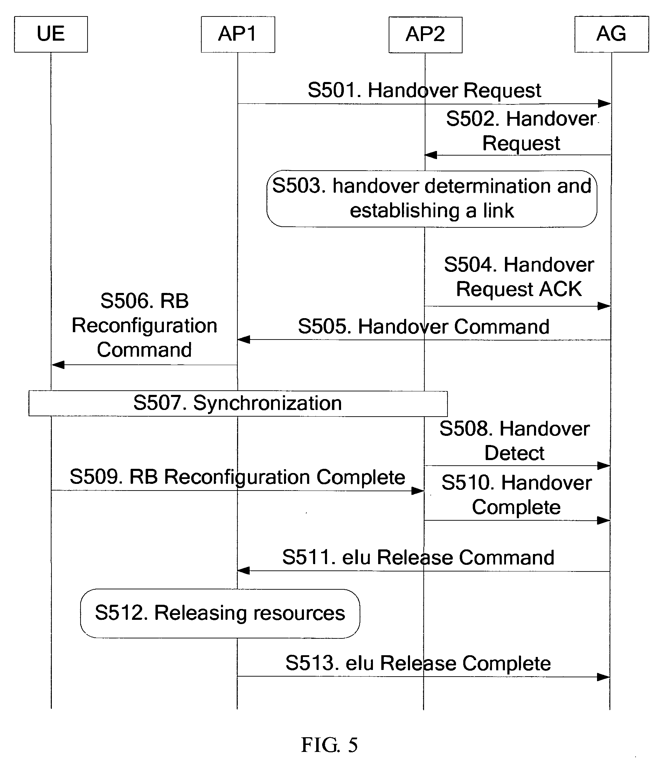

FIG. 5 shows a process of handover between AP1 and AP2 by encapsulating the PS context and CS context into a signaling message in the second embodiment of the present invention. In the second embodiment of the present invention, the handover between AP1 and AP2 is implemented by combining the PS context and CS context of the user into a UE parameter, which lightens the burden of the AG and makes the handover process more efficient and stable. The steps of this process are similar to those described in the first embodiment, and are not further described.

In the second embodiment, the PS context and CS context of the UE are combined into a signaling message. The signaling message is transmitted in the same way as that described in the first embodiment. In the handover process in the second embodiment, the PS context and CS context on AP1 are sent to AP2; related parameters and tunnel directions are adjusted on the AG. This process is invisible to the core network, and the handover may also be implemented between AP1 and AP2 that use the same RNC-ID. The advantage of the second embodiment lies in the combination of the PS context and CS context into a signaling message for transmission, which may lighten the burden of the AG and improve the information transmission efficiency.

### Third Embodiment

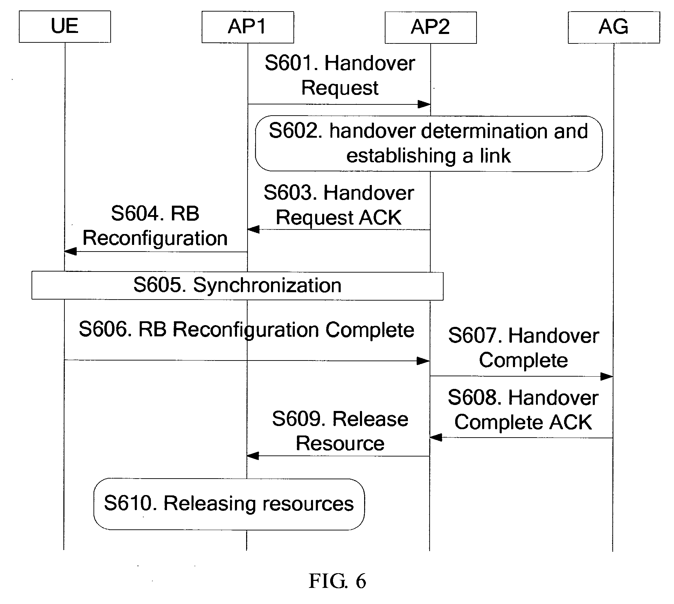

FIG 6 shows a process in which the UE is handed over between AP1 and AP2 in the case of interworking between AP1 and AP2 in the third embodiment of the present invention. In this embodiment, due to the interworking between AP1 and AP2, AP1 may directly send the UE parameters (including PS context and CS context) to AP2. Compared with the preceding embodiments, this embodiment enables the AG to receive fewer signaling messages, thus lightening the burden of the AG, facilitating the handover process, and improving the efficiency.

AP1 may interwork with AP2 through the IP network between APs or through the Iur interface between APs.

The process includes the following steps:
Step S601: AP1 directly sends a Handover Request to AP2.
Step S602: AP2 makes a handover determination. The specific determination method is the same as that in the first embodiment, and is not further described.
Step S603: When determining that the handover can be performed, AP2 sends a Handover Request ACK to AP1.
Step S604: After receiving the Handover Request ACK, AP1 sends an RB Reconfiguration command to the UE.
Step S605: The UE initiates the synchronization process, and begins to synchronize with AP2.
Step S606: After finishing the reconfiguration, the UE sends an RB Reconfiguration Complete message to AP2.
Step S607: AP2 sends a Handover Complete message to the AG, notifying the AG of the information that the UE completes the handover and reconfiguration.

After the UE completes the handover and reconfiguration, the AG adjusts the tunnel path. The adjustment process includes adjusting the uplink and downlink tunnels between the AG and AP1 to the uplink and downlink tunnels between the AG and AP2.

Step S608: After knowing that the UE completes the handover, the AG sends a Handover Complete ACK to AP2.

Step S609: After receiving the Handover Complete ACK, AP2 sends a Release Resource command to AP1.

Step S610: AP1 executes the resource release process.

Detailed above are specific steps in the third embodiment supposing the PS context and CS context are combined for transmission. It is understandable to those skilled in the art that the solution in the third embodiment may also be available when the PS and CS packets are transmitted respectively.

In the third embodiment, being invisible to the core network, the handover is implemented between AP1 and AP2, which overcomes the problem in the prior art that the handover between two APs that use the same RNC-ID cannot be implemented. The interworking between APs reduces the number of signaling messages sent to the AG and lightens the burden of the core network.

It is understandable to those skilled in the art that all or part of the steps in the methods provided in the preceding embodiments may be performed by hardware instructed by a program. The program may be stored in a computer readable storage medium, such as a read-only memory/random access memory (ROM/RAM), a magnetic disk, and a compact disk.

### Fourth Embodiment

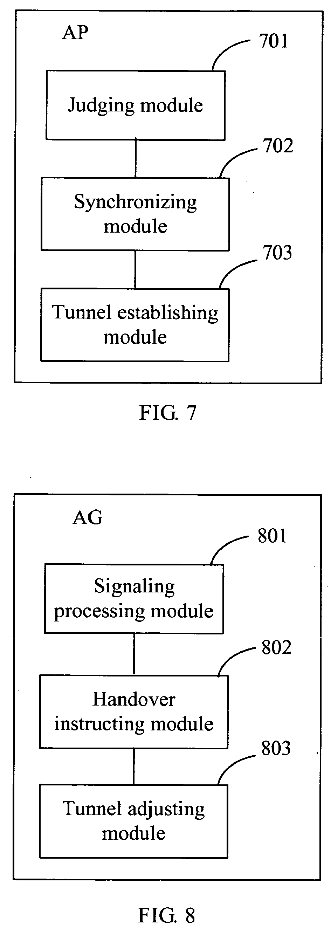

In addition, an AP is provided in an embodiment of the present invention, as shown in FIG. 7. The AP is configured to perform handover between APs that use the same RNC-ID, and includes a judging module 701, a synchronizing module 702, and a tunnel establishing module 703.

The judging module 701 is configured to: receive a handover request, determine, according to related resources and UE context in the handover request, whether handover conditions are met, and, if handover conditions are met, reserve resources and establish a transmission link and a radio link, and send a handover command to related NEs.

The handover request received by the judging module 701 is generally sent by the source AP and processed and forwarded by the AG when the APs cannot interwork. When the APs can interwork, the source AP sends the handover request to the target AP directly. The preceding step of sending a handover command to related NEs generally includes: When the APs cannot interwork, the judging module sends a Handover Request ACK to the AG; after receiving the Handover Request ACK, the AG knows that the handover can be performed and sends a Handover Command to the source AP; when the APs can interwork, the judging module may directly send a Handover Request ACK to the source AP, for ascertaining that the handover can be performed.

The synchronizing module 702 is configured to: synchronize with the UE after the UE receives a reconfiguration command from the source AP and begins to perform reconfiguration if the judging module 701 determines that the handover conditions are met.

The tunnel establishing module 703 is configured to establish uplink and downlink tunnels with the AG according to the instruction from the AG after the synchronizing module 702 finishes the synchronization.

The AP may further include other modules to implement corresponding steps in the method provided in embodiments of the present invention.

### Fifth Embodiment

An AG is provided in an embodiment of the present invention, as shown in FIG. 8. The AG is configured to perform handover between APs that use the same RNC-ID, and includes a signal processing module 801, a handover instructing module 802, and a tunnel adjusting module 803.

The signal processing module 801 is configured to: receive a handover request that includes UE a context sent from the source AP, and send the handover request to the target AP after processing the handover request.

The handover instructing module 802 is configured to: send a handover command to the source AP after the target AP determines, according to the UE context and related resources, that handover conditions are met, reserves resources and establishes a transmission link and a radio link.

The tunnel adjusting module 803 is configured to adjust the uplink and downlink tunnels with the source AP to the uplink and downlink tunnels with the target AP, after the UE performs reconfiguration and synchronizes with the target AP.

The AG may further include other modules to implement corresponding steps in the method provided in embodiments of the present invention.

In addition, a system for performing handover between APs is provided in an embodiment of the present invention. The system includes a UE, the AP and the AG in the preceding embodiments. The AP and the AG are described in detail in the preceding description, and are not further described.

It is understandable to those skilled in the art that the present invention is not only applicable to the UMTS AP but also to similar AP networks such as the GSM AP network. The GSM handover process is basically the same as the UMTS handover process, and their difference mainly lies in the air interface signaling name and specific parameters. The following table lists the mapping between the air interface signaling messages:

| **No.** | **UMTS** | **GSM** |
|---|---|---|
| 1 | RB Reconfiguration | Handover Command |
| 2 | RB Reconfiguration Complete | Handover Complete |

Through the descriptions of the preceding embodiments, those skilled in the art may understand that the present invention may be implemented by hardware only or by software and a necessary universal hardware platform. Based on such understandings, the technical solution under the present invention may be embodied in the form of a software product. The software product may be stored in a nonvolatile storage medium, which can be a compact disk read-only memory (CD-ROM), USB disk, or a removable hard disk. The software product includes a number of instructions that enable a computer device (personal computer, server, or network device) to execute the methods provided in the embodiments of the present invention.

The above descriptions are merely exemplary embodiments of the present invention, but not intended to limit the scope of the present invention. Any modification, equivalent replacement, or improvement made without departing from the principle of the present invention should fall within the scope of the present invention.

## Claims

1. A method for performing handover for a user equipment, UE, between a source access point, AP, and a target AP, wherein the source AP and the target AP are connected to a core network, CN, through an access gateway, AG,
wherein the AG is allocated with an radio network controller identity, RNC-ID, and the target AP and source AP under the AG share the RNC-ID of the AG,
**characterized in that**
the method comprises:
receiving (S607), by the AG, a handover complete message sent from the target AP, notifying the AG of the information that the UE completes the handover from the source AP to the target AP and a reconfiguration in the target AP, wherein the handover complete message is sent by the target AP after the target AP receives a handover request from the source AP and receives a RB Reconfiguration Complete message from the UE;
adjusting, by the AG, uplink and downlink tunnels between the AG and the source AP to uplink and downlink tunnels between the AG and the target AP.

2. The method of claim 1, wherein the handover is invisible to the core network.

3. The method of claim 1 or 2, the method further comprises:
sending, by the AG, a Handover Complete ACK to the target AP after knowing that the UE completes the handover.

4. An access gateway, AG, for performing handover for a user equipment, UE, between a source access point, AP, and a target AP, wherein the source AP and the target AP are connected to a core network, CN, through the AG,
wherein the AG is allocated with a radio network controller identifier, RNC-ID, and the target AP and source AP under the AG share the RNC-ID,
**characterized in that**
the AG comprises:
an unit configured to receive a handover complete message sent from the target AP, notifying the AG of the information that the UE completes the handover from the source AP to the target AP and a reconfiguration in the target AP, wherein the handover complete message is sent by the target AP after the target AP receives a handover request from the source AP and receives a RB Reconfiguration Complete message from the UE;
an unit configured to adjust uplink and downlink tunnels between the AG and the source AP to uplink and downlink tunnels between the AG and the target AP.

5. The AG of claim 4, wherein the handover is invisible to the core network.

6. The AG of claim 4 or 5, wherein the source AP and the target AP belong to a universal mobile telecommunications system, UMTS.

7. The AG of any one of claims 4-6, wherein the AG further comprises:
an unit configured to send a Handover Complete ACK to the target AP after knowing that the UE completes the handover.

8. A system for performing handover for a user equipment, UE, between a source access point, AP, and a target AP, and the system comprises the UE, the target AP and a access gateway, AG, of any one of claims 4-7.

## Patentansprüche

1. Verfahren zum Ausführen von Übergabe für ein Anwendergerät, UE, zwischen einem Ursprungs-Zugangspunkt, Ursprungs-AP, und einem Ziel-AP, wobei der Ursprungs-AP und der Ziel-AP mit einem Kernnetz, CN, über ein Zugangs-Gateway, AG, verbunden sind,
wobei dem AG eine Funknetzsteuereinheitkennung, RNC-ID, zugewiesen ist und der Ziel-AP und der Ursprungs-AP unter dem AG die RNC-ID des AG gemeinsam verwenden,
**dadurch gekennzeichnet, dass**
das Verfahren Folgendes umfasst:
Empfangen (S607) durch das AG einer Übergabefertigstellungsnachricht, die von dem Ziel-AP gesendet wird, die dem AG die Informationen, dass das UE die Übergabe von dem Ursprungs-AP zu dem Ziel-AP fertigstellt, und eine Neukonfiguration in dem Ziel-AP meldet, wobei die Übergabefertigstellungsnachricht durch den Ziel-AP gesendet wird, nachdem der Ziel-AP eine Übergabeanforderung von dem Ursprungs-AP empfangen hat und eine RB-Neukonfigurationsfertigstellungsnachricht von dem UE empfangen hat;
Anpassen durch das AG von Aufwärtsstrecken- und Abwärtsstreckentunneln zwischen dem AG und dem Ursprungs-AP an Aufwärtsstrecken- und Abwärtsstreckentunnel zwischen dem AG und dem Ziel-AP.

2. Verfahren nach Anspruch 1, wobei die Übergabe für das Kernnetz unsichtbar ist.

3. Verfahren nach Anspruch 1 oder 2, wobei das Verfahren ferner Folgendes umfasst:
Senden durch das AG einer Übergabefertigstellungs-ACK zu dem Ziel-AP nach dem Erkennen, dass das UE die Übergabe fertiggestellt hat.

4. Zugangs-Gateway, AG, zum Ausführen von Übergabe für ein Anwendergerät, UE, zwischen einem Ursprungs-Zugangspunkt, Ursprungs-AP, und einem Ziel-AP, wobei der Ursprungs-AP und der Ziel-AP mit einem Kernnetz, CN, über das AG verbunden sind,
wobei dem AG eine Funknetzsteuereinheitkennung, RNC-ID, zugewiesen ist und der Ziel-AP und der Ursprungs-AP unter dem AG die RNC-ID gemeinsam verwenden, **dadurch gekennzeichnet, dass**
das AG Folgendes umfasst:
eine Einheit, die konfiguriert ist, eine Übergabefertigstellungsnachricht zu empfangen, die von dem Ziel-AP gesendet wird, die dem AG die Informationen, dass das UE die Übergabe von dem Ursprungs-AP zu dem Ziel-AP fertigstellt, und eine Neukonfiguration in dem Ziel-AP meldet, wobei die Übergabefertigstellungsnachricht durch den Ziel-AP gesendet wird, nachdem der Ziel-AP eine Übergabeanforderung von dem Ursprungs-AP empfangen hat und eine RB-Neukonfigurationsfertigstellungsnachricht von dem UE empfangen hat;
eine Einheit, die konfiguriert ist, Aufwärtsstrecken- und Abwärtsstreckentunnel zwischen dem AG und dem Ursprungs-AP an Aufwärtsstrecken- und Abwärtsstreckentunnel zwischen dem AG und dem Ziel-AP anzupassen.

5. AG nach Anspruch 4, wobei die Übergabe für das Kernnetz unsichtbar ist.

6. AG nach Anspruch 4 oder 5, wobei der Ursprungs-AP und der Ziel-AP zu einem universellen Mobilkommunikationssystem, UMTS, gehören.

7. AG nach einem der Ansprüche 4-6, wobei das AG ferner Folgendes umfasst:
eine Einheit, die konfiguriert ist, eine Übergabefertigstellungs-ACK zu dem Ziel-AP nach dem Erkennen, dass das UE die Übergabe fertiggestellt hat, zu senden.

8. System zum Ausführen von Übergabe für ein Anwendergerät, UE, zwischen einem Ursprungs-Zugangspunkt, Ursprungs-AP, und einem Ziel-AP, und wobei das System das UE, den Ziel-AP und ein Zugangs-Gateway, AG, nach einem der Ansprüche 4-7 umfasst.

## Revendications

1. Procédé permettant d'effectuer un transfert de communication pour un équipement utilisateur, UE, entre un point d'accès, AP, source et un point d'accès, AP, cible, le point d'accès AP source et le point d'accès AP cible étant connectés à un réseau central, CN, par l'intermédiaire d'une passerelle d'accès, AG,
dans lequel la passerelle AG reçoit en allocation une identité de contrôleur de réseau radio, RNC - ID et le point d'accès AP cible tout comme le point d'accès AP source sous la passerelle AG partagent l'identité RNC-ID de la passerelle AG,
**caractérisé en ce que**
le procédé comprend :
la réception (S607), par la passerelle AG, d'un message d'achèvement de transfert de communication envoyé depuis le point d'accès AP cible, la notification à la passerelle AG des informations sur le fait que l'équipement utilisateur UE achève le transfert de communication depuis le point d'accès AP source jusqu'au point d'accès AP cible, et d'une reconfiguration dans le point d'accès AP cible, le message d'achèvement de transfert de communication étant envoyé par le point d'accès AP cible après que le point d'accès AP cible a reçu une demande de transfert de communication en provenance du point d'accès AP source et a reçu un message d'achèvement de reconfiguration RB provenant de l'équipement utilisateur UE,
l'ajustement, par la passerelle AG, de tunnels de liaison montante et descendante entre la passerelle AG et le point d'accès AP source en tunnels de liaison montante et descendante entre la passerelle AG et le point d'accès AP cible.

2. Procédé selon la revendication 1, dans lequel le transfert de communications est invisible pour le réseau central.

3. Procédé selon la revendication 1 ou la revendication 2, le procédé comprenant en outre :
l'envoi, par la passerelle AG, d'un accusé de réception, ACK, d'achèvement de transfert de communication au point d'accès AP cible après avoir pris connaissance du fait que l'équipement utilisateur UE achève le transfert de communication.

4. Passerelle d'accès, AG, destinée à effectuer un transfert de communication pour un équipement utilisateur, UE, entre un point d'accès, AP, source et un point d'accès, AP, cible, le point d'accès AP source et le point d'accès AP cible étant connectés à un réseau central, CN, par l'intermédiaire de la passerelle AG,
la passerelle AG recevant en allocation un identificateur de contrôleur de réseau radio, RNC-ID et le point d'accès AP cible tout comme le point d'accès AP source partageant l'identificateur RNC-ID,
**caractérisée en ce que**
la passerelle AG comprend :
une unité configurée pour recevoir un message d'achèvement de transfert de communication envoyé depuis le point d'accès AP cible, signalant à la passerelle AG des informations sur le fait que l'équipement utilisateur UE achève le transfert de communication depuis le point d'accès AP source jusqu'au point d'accès AP cible ainsi qu'une reconfiguration dans le point d'accès AP cible, le message d'achèvement de transfert de communication étant envoyé par le point d'accès AP cible après que le point d'accès AP cible a reçu une demande de transfert de communication en provenance du point d'accès AP source et a reçu un message d'achèvement de reconfiguration RB provenant de l'équipement utilisateur UE,
une unité configurée pour ajuster des tunnels de liaison montante et descendante entre la passerelle AG et le point d'accès AP source en tunnels de liaison montante et descendante entre la passerelle AG et le point d'accès AP cible.

5. Passerelle AG selon la revendication 4, dans laquelle le transfert de communication est invisible pour le réseau central.

6. Passerelle AG selon la revendication 4 ou la revendication 5, dans laquelle le point d'accès AP source et le point d'accès AP cible appartiennent à un système universel de télécommunications mobiles, UMTS.

7. Passerelle AG selon l'une quelconque des revendications 4 à 6, la passerelle AG comprenant en outre :
une unité configurée pour envoyer un accusé de réception, ACK, d'achèvement de transfert de communication au point d'accès AP cible après avoir pris connaissance du fait que l'équipement utilisateur UE achève le transfert de communication.

8. Système permettant d'effectuer un transfert de communication pour un équipement utilisateur, UE, entre un point d'accès, AP, source et un point d'accès, AP, cible, le système comprenant l'équipement utilisateur UE, le point d'accès AP cible et une passerelle d'accès, AG, conforme à l'une quelconque des revendications 4 à 7.
